(19) Europäisches Patentamt
European Patent Office
Office européen des brevets

(11) **EP 2 717 408 B1**

(12) **FASCICULE DE BREVET EUROPEEN**

(45) Date de publication et mention de la délivrance du brevet:
**22.11.2017 Bulletin 2017/47**

(51) Int Cl.:
***H02J 3/18*** (2006.01)

(21) Numéro de dépôt: **13187299.6**

(22) Date de dépôt: **04.10.2013**

(54) **Compensateur d'énergie réactive**

Blindleistungskompensator

Reactive power compensator

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1259477**

(43) Date de publication de la demande:
**09.04.2014 Bulletin 2014/15**

(73) Titulaire: **Schneider Electric Industries SAS 92500 Rueil-Malmaison (FR)**

(72) Inventeurs:
• **Follic, Stéphane**
  **38660 Lumbin (FR)**
• **Orban, Rémy**
  **38410 Saint Martin d'Uriage (FR)**
• **Urankar, Lionel**
  **38050 Grenoble Cedex 09 (FR)**

(74) Mandataire: **Lavoix**
  **62, rue de Bonnel**
  **69448 Lyon Cedex 03 (FR)**

(56) Documents cités:
GB-A- 2 304 240    US-A- 4 571 535
US-A- 5 684 389    US-A- 5 963 021
US-A- 6 107 785    US-A- 6 121 758

• OLIVIER G ET AL: "MINIMAL TRANSIENT SWITCHING OF CAPACITORS", IEEE TRANSACTIONS ON POWER DELIVERY, IEEE SERVICE CENTER, NEW YORK, NY, US, vol. 8, no. 4, 1 octobre 1993 (1993-10-01) , pages 1988-1994, XP000422626, ISSN: 0885-8977, DOI: 10.1109/61.248312

EP 2 717 408 B1

**Description**

La présente invention concerne un compensateur d'énergie réactive pour un réseau triphasé présentant une première phase, une deuxième phase et une troisième phase. Le compensateur selon l'invention comprend un ensemble de condensateur(s), au moins deux contacteurs électromécaniques connectés électriquement à l'ensemble de condensateur(s), chaque contacteur comportant au moins une borne de puissance amont et au moins une borne de puissance aval, un courant électrique étant propre à circuler entre les bornes de puissance amont et aval en position fermée du contacteur, un premier contacteur étant propre à être relié à la première phase et un deuxième contacteur étant propre à être relié à la troisième phase, des moyens de mesure de la tension entre les bornes de puissance amont et aval d'au moins un contacteur électromécanique, et des moyens de commande des contacteurs électromécaniques suivant une loi de commande prédéterminée.

On connaît des compensateurs d'énergie réactive comprenant des contacteurs électromécaniques avec un auxiliaire de préinsertion de résistance pour limiter la pointe de courant à l'enclenchement des contacteurs, c'est-à-dire au moment où le contacteur autorise le passage du courant.

Le document GB 2 304 240 A décrit ainsi un compensateur qui comprend une inductance de limitation de courant, un condensateur et des moyens de contrôle configurés pour exécuter une séquence d'opérations de commutation de manière à ce qu'un état au moins partiellement déchargé du condensateur coïncide avec un état à courant nul du circuit électrique.

Il est également connu du document US 5 963 021 A un dispositif de commutation de condensateurs qui comprend des commutateurs associés à chacun des condensateurs et un contrôleur configuré pour commuter successivement les condensateurs selon une loi de commande prédéterminée.

Toutefois, la loi de commande des contacteurs électromécaniques est asynchrone et l'enclenchement des contacteurs est susceptible de se produire lorsque la tension aux bornes d'un contacteur est maximale. Dans ce cas, le compensateur doit supporter des pointes de courant très élevées qui engendrent de fortes contraintes et cette solution, bien que relativement peu coûteuse, peut dans le temps présenter des faiblesses qui nuisent à sa fiabilité. De plus, le temps de décharge des condensateurs par le biais de résistances de décharge est important tout en étant normativement inférieur à la minute, et cette solution ne permet pas de réaliser une compensation active de l'énergie réactive, telle qu'une compensation avec une décharge de l'ensemble de condensateurs en quelques dizaines de ms.

Le but de l'invention est donc de proposer un compensateur d'énergie réactive permettant de réduire les risques d'endommagement des contacteurs électromécaniques, tout en réalisant une compensation beaucoup plus rapide de l'énergie réactive, c'est-à-dire une compensation avec une décharge de l'ensemble de condensateurs en quelques dizaines de ms.

A cet effet, l'invention a pour objet un compensateur d'énergie réactive selon la revendication 1.

Suivant d'autres aspects avantageux de l'invention, le compensateur d'énergie réactive comprend une ou plusieurs des caractéristiques des revendications 2 à 7.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est un schéma électrique d'un compensateur d'énergie réactive conforme à l'invention, le compensateur d'énergie réactive comprenant un ensemble de condensateurs et deux contacteurs électromécaniques connectés électriquement à l'ensemble de condensateurs,

- la figure 2 est un ensemble de courbes représentant l'évolution temporelle des tensions aux bornes des condensateurs du compensateur de la figure 1, lors de l'ouverture successive des deux contacteurs,

- la figure 3 est un ensemble de courbes représentant l'évolution temporelle d'une tension et d'un courant aux bornes d'un condensateur et des tensions entre des bornes de puissance amont et aval de deux contacteurs, lors de l'ouverture successive des deux contacteurs, et

- la figure 4 est un ensemble de courbes représentant l'évolution temporelle d'une tension et d'un courant aux bornes d'un condensateur et des tensions entre les bornes de puissance amont et aval de deux contacteurs, lors de la fermeture successive des deux contacteurs.

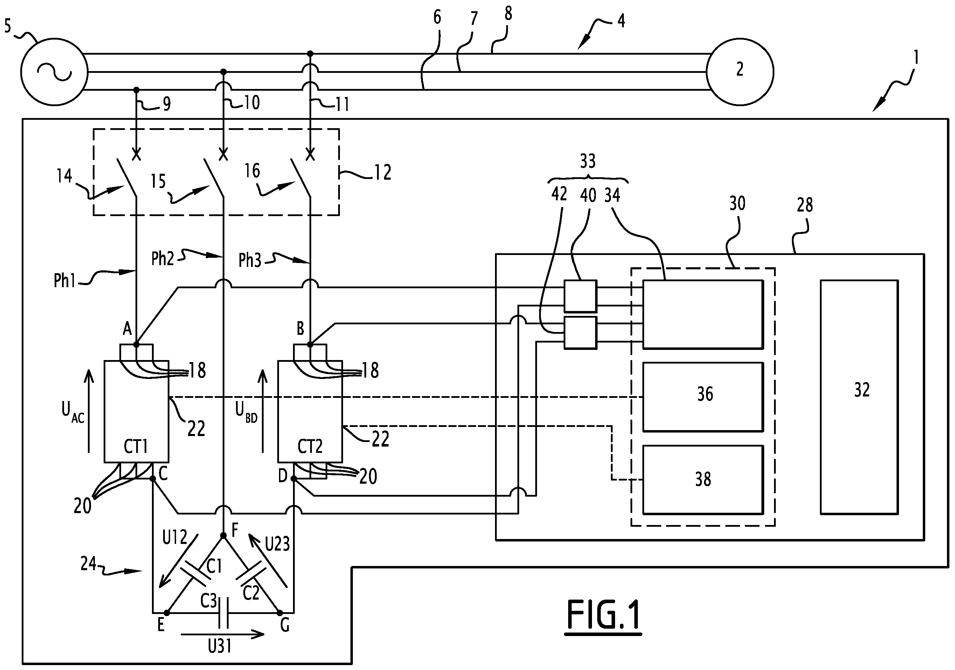

Sur la figure 1, un compensateur d'énergie réactive 1 et une charge électrique 2 sont connectés électriquement à un réseau alternatif 4, le réseau alternatif 4 étant alimenté par un générateur de tension alternative 5 et comportant plusieurs conducteurs de phase 6, 7, 8. Dans l'exemple de réalisation de la figure 1, le réseau alternatif 4 est un réseau triphasé et comporte un premier conducteur de phase 6, un deuxième conducteur de phase 7, et un troisième conducteur de phase 8. La tension triphasée du réseau alternatif 4 est périodique. La fréquence du réseau est, par exemple, égale à 50 Hz ou 60 Hz, et la période de la tension triphasée est alors égale à 20 ms ou 16,67 ms.

Le compensateur d'énergie réactive 1 est relié aux premier 6, deuxième 7 et respectivement troisième 8 conducteurs de phase par une première liaison électrique 9, une deuxième liaison électrique 10, et respectivement une troisième liaison électrique 11. Dans la suite de la description, la première liaison électrique 9 connectée au premier conducteur de phase 6 correspond à la première phase, notée Ph1, la deuxième liaison électrique 10 connectée au deuxième conducteur de phase 7 correspond à la deuxième phase, notée Ph2, et la troisième liaison électrique 11 connectée au troisième conducteur de phase 8 correspond à la troisième phase, notée Ph3.

Le compensateur d'énergie réactive 1 comprend un disjoncteur triphasé 12 comportant un premier 14, un deuxième 15 et un troisième 16 modules de disjonction connectés respectivement aux première, deuxième et troisième phases. En variante, le compensateur d'énergie réactive comprend trois disjoncteurs distincts, chacun étant connecté à une phase respective parmi les première, deuxième et troisième phases.

En complément et de manière facultative, le compensateur d'énergie réactive 1 comprend également une première inductance, une deuxième inductance, et une troisième inductance, non représentées, associées respectivement aux première, deuxième et troisième phases et connectées en série avec respectivement les premier 14, deuxième 15 et troisième 16 modules de disjonction.

Le compensateur d'énergie réactive 1 comprend un premier contacteur électromécanique CT1 connecté en série avec le premier module de disjonction 14. On note A et C les extrémités du premier contacteur électromécanique CT1, l'extrémité A étant reliée au premier module de disjonction 14.

Le compensateur d'énergie réactive 1 comprend un deuxième contacteur électromécanique CT2 connecté en série avec le troisième module de disjonction 16. On note B et D les extrémités du deuxième contacteur électromécanique CT2, l'extrémité B étant reliée au troisième module de disjonction 16.

Les premier et deuxième contacteurs électromécaniques CT1, CT2 comportent chacun au moins une borne de puissance amont 18, au moins une borne de puissance aval 20 et au moins un contact mobile, non représenté. Comme connu en soi, le contact mobile est mobile entre une position fermée du contacteur CT1, CT2 dans laquelle le contact mobile est au contact des bornes de puissance amont et aval 18, 20 respectives et permet la circulation d'un courant entre les bornes de puissance amont et aval 18, 20 de manière bidirectionnelle, et une position ouverte du contacteur CT1, CT2 dans laquelle le contact mobile est à l'écart des bornes de puissance amont et aval 18, 20 respectives, le courant ne pouvant alors pas circuler entre les bornes de puissance amont et aval 18, 20.

Les premier et deuxième contacteurs électromécaniques CT1, CT2 comportent chacun une borne de commande 22 pour la commande du ou des contacts mobiles correspondant entre les positions fermée et ouverte.

Dans l'exemple de réalisation de la figure 1, les premiers et deuxième contacteurs électromécaniques CT1, CT2 comportent chacun trois bornes de puissance amont 18, trois bornes de puissance aval 20 et trois contacts mobiles non représentés. Les contacts mobiles des contacteurs CT1, CT2 sont utilisés en parallèle pour minimiser les échauffements et réduire les dimensions du compensateur. Autrement dit, d'une part, les trois bornes de puissance amont 18 sont reliées entre elles, en l'extrémité A, respectivement B, et connectées au module de disjonction 14, 16 correspondant, et d'autre part, les trois bornes de puissance aval 20 sont reliées entre elles, en l'extrémité C, respectivement D, les trois contacts mobiles étant propres à être commandés de manière simultanée.

Le compensateur d'énergie réactive 1 comprend également un ensemble 24 de condensateurs. Dans l'exemple de réalisation de la figure 1, l'ensemble de condensateurs 24 est agencé selon une configuration en triangle, chacun des sommets E, F, G du triangle correspondant à une phase respective Ph1, Ph2, Ph3.

En complément et de manière facultative, le compensateur d'énergie réactive 1 comprend également un ensemble de résistances de décharge, non représentées, chaque résistance de décharge étant connectée en parallèle d'un condensateur respectif de l'ensemble de condensateurs 24.

Le compensateur d'énergie réactive 1 comprend également un organe de supervision 28, l'organe de supervision 28 comportant une mémoire 30 et un processeur 32 associé à la mémoire 30, et des moyens 33 de mesure de la tension entre les bornes de puissance amont et aval 18, 20 d'au moins un contacteur électromécanique CT1, CT2.

L'ensemble 24 comprend un premier condensateur C1 connecté entre la première phase Ph1 et la deuxième phase Ph2, un deuxième condensateur C2 connecté entre la deuxième phase Ph2 et la troisième phase Ph3, et un troisième condensateur C3 connecté entre la troisième phase Ph3 et la première phase Ph1. Autrement dit, une extrémité du premier condensateur C1 est reliée au sommet E, lui-même relié à l'extrémité C du premier contacteur CT1 associée à la première phase Ph1, et l'autre extrémité du premier condensateur C1 est reliée au sommet F, lui-même relié à la deuxième inductance 20 associée à la deuxième phase Ph2. Une extrémité du deuxième condensateur C2 est reliée au sommet F et l'autre extrémité du deuxième condensateur C2 est reliée au sommet G, lui-même relié à l'extrémité D du deuxième contacteur CT2 associée à la troisième phase Ph3. Enfin, une extrémité du troisième condensateur C3 est reliée au sommet G et l'autre extrémité du troisième condensateur C3 est reliée au sommet E.

La tension aux bornes du premier condensateur C1 est notée U12, la tension aux bornes du deuxième condensateur C2 est notée U23, et la tension aux bornes du troisième condensateur C3 est notée U31, comme représenté sur la figure 1.

La mémoire 30 est apte à stocker un logiciel 34 de mesure d'une première tension $U_{AC}$ entre les bornes de puissance amont et aval 18, 20 du premier contacteur CT1, et d'une deuxième tension $U_{BD}$ entre les bornes de puissance amont et aval 18, 20 du deuxième contacteur CT2.

La mémoire 30 est également apte à stocker un premier logiciel 36 de commande du premier contacteur CT1 suivant une loi de commande prédéterminée, ainsi qu'un deuxième logiciel 38 de commande du deuxième contacteur CT2 suivant une loi de commande prédéterminée. Les premier et deuxième logiciels de commande 36, 38 forment des moyens de commande des contacteurs électromécaniques CT1, CT2 suivant la loi de commande prédéterminée et via les bornes de commande 22. En variante, les moyens de commande 36, 38 est réalisé sous forme d'un circuit intégré dédié ou encore sous forme d'un circuit logique programmable. Les moyens de commande permettent d'obtenir des temps de fermeture et d'ouverture relativement stables et très peu sensibles aux variations de tension et de température. Les moyens de commande réalisent également le calcul des temps de fermeture et d'ouverture.

Les moyens de mesure 33 comportent le logiciel de mesure 34 et par exemple des ponts résistifs 40, 42, un premier pont résistif 40 étant propre à transmettre un premier signal représentatif de la tension entre les bornes de puissance amont et aval 18, 20 du premier contacteur CT1 au logiciel de mesure 36 et un deuxième pont résistif 42 étant propre à transmettre un deuxième signal représentatif de la tension entre les bornes de puissance amont et aval 18, 20 du deuxième contacteur CT2 au logiciel de mesure 36.

En variante, les moyens de mesure 33 sont propres à mesurer uniquement la tension $U_{AC}$ entre les bornes de puissance amont et aval 18, 20 du premier contacteur CT1, et la fermeture du premier contacteur CT1 est déterminée à partir de la tension $U_{AC}$ mesurée par les moyens de mesure 33, la fermeture du deuxième contacteur CT2 étant déterminée en fonction de celle du premier contacteur CT1 avec un décalage temporel prédéterminé entre la fermeture du premier contacteur CT1 et la fermeture du deuxième contacteur CT2.

Le décalage temporel prédéterminé est, par exemple, sensiblement égal au quart de la période de la tension triphasée.

Les moyens de commande 36, 38 sont propres à envoyer des signaux de commande d'ouverture ou de fermeture à la borne de commande 22, respectivement des premier CT1 et deuxième CT2 contacteurs suivant la loi de commande prédéterminée.

La loi de commande prédéterminée comporte la fermeture d'un contacteur électromécanique CT1, CT2 respectif pour une tension sensiblement nulle entre ses bornes de puissance amont et aval 18, 20, et l'ouverture d'un contacteur électromécanique CT1, CT2 respectif pour une valeur sensiblement minimale de l'énergie des condensateurs C1, C2, C3 auxquels ledit contacteur CT1, CT2 est connecté, la valeur minimale de l'énergie stockée dans les condensateurs C1, C2, C3 étant obtenue à la fin de la séquence d'ouverture.

Les moyens de commande 36, 38 comportent en outre des moyens de recalage temporel de l'envoi des signaux de commande en fonction d'une mesure du temps de commutation de chacun des contacteurs CT1, CT2. Le recalage temporel de l'envoi des signaux est, par exemple, effectué à l'aide d'une moyenne glissante. La moyenne glissante permet de prendre en compte les évolutions lentes des temps de fermeture et d'ouverture.

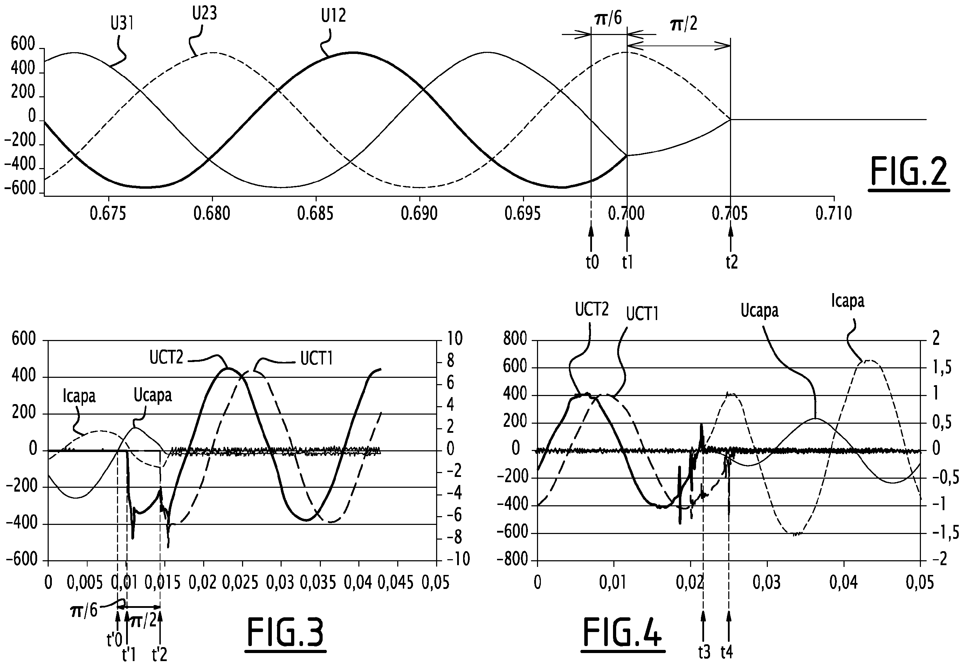

Le fonctionnement de l'ouverture des premier et deuxième contacteurs électromécaniques CT1, CT2 du compensateur d'énergie réactive 1 va désormais être expliqué à l'aide des figures 2 et 3 réalisées respectivement à l'aide de simulation et de mesures réelles.

La figure 2 représente l'évolution respective temporelle des tensions U12, U23, U31 aux bornes des premier C1, deuxième C2 et troisième C3 condensateurs de l'ensemble 24 lors de l'ouverture des premier et deuxième contacteurs électromécaniques CT1, CT2.

Sur la figure 2, les tensions U12, U23, U31 aux bornes des condensateurs C1, C2, C3 sont sinusoïdales, de même amplitude et déphasées d'un angle de $2x\pi/3$, comme connu en soi. A un instant t0, visible sur la figure 2, la tension U31 mesurée par les moyens de mesure 33 est sensiblement nulle. Le premier logiciel de commande 36 réalise alors l'ouverture du premier contacteur CT1 à un instant t1, puis le deuxième logiciel de commande 38 réalise l'ouverture du deuxième contacteur CT2 à un instant t2. Les signaux de commande d'ouverture du premier contacteur CT1 et respectivement du deuxième contacteur CT2 sont envoyés avant les instants t1 et respectivement t2 par les premier et deuxième logiciels de commande 36, 38, afin de prendre en compte la durée de commutation des contacteurs CT1, CT2. Autrement dit, les instants t1 et respectivement t2 correspondent aux instants auxquels le premier contacteur CT1 et respectivement le deuxième contacteur CT2 sont effectivement ouverts. L'ouverture des contacteurs CT1, CT2 est commandée afin de décharger les condensateurs C1, C2, C3. Après l'ouverture des deux contacteurs CT1 et CT2, chacune des tensions U12, U23, U31 aux bornes des condensateurs C1, C2, C3 est nulle.

Sur la figure 2, les condensateurs C1, C2, C3 sont déchargés dans un délai d'environ 6,67 ms à partir de la détection du passage par zéro d'une des tensions U12, U23, U31 aux bornes des condensateurs C1, C2, C3, lorsque la fréquence du réseau est égale à 50 Hz. Ce délai de décharge des condensateurs est d'environ 5,5 ms lorsque la fréquence du réseau est égale à 60 Hz.

Les conditions pour l'ouverture du premier contacteur CT1 afin d'avoir la valeur minimale de l'énergie stockée dans les condensateurs auxquels le premier contacteur CT1 est lié vérifient, par exemple, l'équation [1] suivante :

les conditions pour l'ouverture du premier contacteur pour avoir la valeur minimale d'énergie stockée dans les condensateurs vérifient l'équation suivante

$$U31 - U12 = 0 \qquad [1],$$

c'est-à-dire lorsque U31 = U12, ce qui est vérifié à l'instant t1, dans l'exemple de réalisation de la figure 2.

De même, les conditions pour l'ouverture du deuxième contacteur CT2 afin d'avoir la valeur minimale de l'énergie stockée dans les condensateurs auxquels le deuxième contacteur CT2 est lié vérifient, par exemple, l'équation [2] suivante :

$$U31 - U23 = 0 \qquad [2],$$

c'est-à-dire lorsque U31 = U23, ce qui est vérifié à l'instant t2, dans l'exemple de réalisation de la figure 2.

La figure 3 montre un autre exemple, pour des valeurs mesurées, de l'ouverture des contacteurs CT1, CT2 lorsque une tension mesurée par les moyens de mesure 33 aux bornes d'une capacité est sensiblement nulle. A un instant t'0 une tension Ucapa correspondant à une tension U12, U23, U31 aux bornes d'un condensateur respectif C1, C2, C3 est sensiblement nulle. A un instant t'1, le deuxième contacteur CT2 est ouvert. Puis, après un déphasage de $\pi/2$, c'est-à-dire un décalage temporel sensiblement égal au quart de la période de la tension triphasée du réseau 4, le premier contacteur CT1 est ouvert à l'instant t'2. Lorsque la fréquence de la tension du réseau 4 est de 50 Hz, le déphasage de $\pi/2$ correspond à un délai de 5ms entre l'ouverture du deuxième contacteur CT2 et du premier contacteur CT1. Après l'instant t'2, les courbes en tension, notées respectivement UCT1 et UCT2, entre les bornes de puissance amont et aval 18, 20 des premier et deuxième contacteurs CT1 et CT2 ont sensiblement la même amplitude, ce qui indique que la commutation des contacteurs CT1, CT2 a bien été réalisée pour des condensateurs C1, C2, C3 déchargés.

L'ouverture de chaque contacteur CT1, CT2 respectif correspond, à une tolérance de préférence égale à plus ou moins 500 $\mu$s près, à l'instant t1, t2 où la valeur de l'énergie des condensateurs C1, C2, C3, auxquels les contacteurs CT1, CT2 sont connectés, est minimale, à la fin de la séquence d'ouverture.

Sur la figure 3, les condensateurs C1, C2, C3 sont déchargés dans un délai d'environ 6,67 ms à partir de la détection d'un passage par zéro de la tension Ucapa, lorsque la fréquence du réseau est égale à 50 Hz. Ce délai de décharge des condensateurs est d'environ 5,5 ms lorsque la fréquence du réseau est égale à 60 Hz.

Le fonctionnement de la fermeture des contacteurs CT1, CT2 du compensateur d'énergie réactive 1 va désormais être expliqué à l'aide de la figure 4.

De manière similaire à la figure 3, la figure 4 montre l'évolution des tensions UCT1, UCT2 entre les bornes de puissance amont et aval 18, 20 des contacteurs CT1, CT2, ainsi que de la tension Ucapa et une intensité Icapa aux bornes d'un condensateur C1, C2, C3.

Avant un instant t3 visible à la figure 4, les tensions UCT1, UCT2 sont sinusoïdales, de même amplitude, et déphasées d'un angle de $2\times\pi/3$, comme connu en soi.

A l'instant t3, la tension UCT2 est sensiblement nulle et le logiciel de commande 36 a au préalable commandé la fermeture du deuxième contacteur CT2 afin que celle-ci soit effective à cet instant t3. Le courant Icapa apparaît alors à partir de cet instant t3.

De même, à l'instant t4, la tension UCT1 est sensiblement nulle et le logiciel de commande 36 a au préalable commandé la fermeture du premier contacteur CT1 afin que celle-ci soit effective à cet instant t4. La fermeture du premier contacteur CT1 correspond ainsi au passage du régime monophasé au régime triphasé.

Avant la fermeture des premier et deuxième contacteurs CT1, CT2, la tension Ucapa et l'intensité Icapa sont nulles. Après leur ouverture, la tension Ucapa et l'intensité Icapa sont nulles.

La fermeture de chaque contacteur CT1, CT2 respectif correspond, à une tolérance de préférence égale à plus ou moins 800 $\mu$s près, à l'instant t3, t4 où la valeur de la tension UCT1, UCT2 entre les bornes de puissance amont et aval 18, 20 du contacteur CT1, CT2 correspondant est nulle.

Les premier et deuxième logiciels de commande 36, 38 envoient des signaux de commande d'ouverture et de fermeture des contacteurs CT1, CT2 respectifs et prennent en compte, au cours du temps, le temps de commutation de chacun des contacteurs CT1, CT2 lors de leurs différentes phases d'ouverture et fermeture.

En variante, seule la tension $U_{AC}$ entre les bornes de puissance amont et aval 18, 20 du premier contacteur CT1 est mesurée, la fermeture du premier contacteur CT1 étant déterminée à partir de la tension $U_{AC}$ mesurée par les moyens de mesure 33, telle qu'au passage par zéro de cette tension $U_{AC}$, et la fermeture du deuxième contacteur CT2 est déterminée en fonction de celle du premier contacteur CT1 avec un décalage temporel prédéterminé entre la fermeture du premier contacteur CT1 et la fermeture du deuxième contacteur CT2. Le décalage temporel prédéterminé est, par exemple, sensiblement égal au quart de la période de la tension triphasée.

Selon un autre mode de réalisation, non représenté, le compensateur d'énergie réactive 1 comprend trois contacteurs, chaque contacteur étant connecté électriquement à l'une des phases respective Ph1, Ph2, Ph3.

Une phase parmi les première, deuxième et troisième phases Ph1, Ph2, Ph3 est connectée en premier à l'ensemble de condensateur 24 via la fermeture d'un contacteur correspondant parmi les trois contacteurs, cette connexion étant réalisée à n'importe quel moment étant donné que la connexion est faite alors qu'aucun courant n'est présent au niveau des bornes de puissance amont et aval 18, 20 du contacteur correspondant (connexion à vide).

Les deux autres phases parmi les premières, deuxième et troisième phases Ph1, Ph2, Ph3 sont ensuite connectées à l'ensemble de condensateurs 24 via la fermeture des deux autres contacteurs correspondants, la loi de commande de ces deux autres contacteurs étant analogue à celle qui a été décrite pour le mode de réalisation précédent dans lequel le compensateur d'énergie réactive comprend seulement deux contacteurs.

L'ouverture des deux autres contacteurs correspondants est ensuite effectuée selon une loi de commande analogue à celle qui a été décrite pour le mode de réalisation précédent dans lequel le compensateur d'énergie réactive comprend seulement deux contacteurs afin d'avoir la valeur minimale de l'énergie stockée dans les condensateurs auxquels les deux autres contacteurs sont liés.

Enfin, le contacteur qui a été fermé en premier parmi les trois contacteurs est ouvert, cette ouverture étant effectuée à n'importe quel moment après l'ouverture des deux autres contacteurs, étant donné que l'ouverture est faite alors qu'aucun courant n'est présent au niveau des bornes de puissance amont et aval 18, 20 de ce contacteur (déconnexion à vide).

Dans ce mode de réalisation, la défaillance d'un des trois contacteurs ayant pour résultat le blocage du contacteur défaillant dans une position de fermeture, c'est-à-dire la soudure du ou des contacts mobiles en position fermée du contacteur, n'implique pas une défaillance du compensateur d'énergie réactive 1 dans la mesure où le fonctionnement ainsi dégradé se rapporte au cas décrit précédemment, deux contacteurs restant opérationnels.

Le compensateur 1 selon l'invention permet ainsi de réduire les risques d'endommagement des premier et deuxième contacteurs électromécaniques CT1, CT2, tout en réalisant une compensation rapide de l'énergie réactive, c'est-à-dire une compensation avec une décharge de l'ensemble 24 de condensateurs C1, C2, C3 en quelques dizaines de ms.

Le compensateur 1 selon l'invention permet également de s'affranchir de la présence d'inductances, c'est-à-dire de bobines électromagnétiques, associées respectivement aux première, deuxième et troisième phases et connectées en série avec respectivement les premier 14, deuxième 15 et troisième 16 modules de disjonction.

**Revendications**

1. Compensateur d'énergie réactive (1) pour un réseau (4) triphasé présentant une première phase (6), une deuxième phase (7) et une troisième phase (8), le compensateur (1) comprenant un ensemble (24) de condensateur(s) (C1, C2, C3), au moins deux contacteurs (CT1, CT2) électromécaniques connectés électriquement à l'ensemble (24) de condensateur(s) (C1, C2, C3), chaque contacteur (CT1, CT2) comportant au moins une borne de puissance amont (18) et au moins une borne de puissance aval (20), un courant électrique étant propre à circuler entre les bornes de puissance amont et aval (18, 20) en position fermée du contacteur (CT1, CT2), un premier contacteur (CT1) étant propre à être relié à la première phase (Ph1) et un deuxième contacteur (CT2) étant propre à être relié à la troisième phase (Ph3), des moyens (33) de mesure de la tension entre les bornes de puissance amont et aval (18, 20) d'au moins un contacteur (CT1, CT2) électromécanique, et des moyens (36, 38) de commande des contacteurs (CT1, CT2) électromécaniques suivant une loi de commande prédéterminée,
**caractérisé en ce que** la loi de commande comporte la fermeture d'un contacteur (CT1, CT2) électromécanique respectif pour une tension ($U_{AC}$, $U_{BD}$) sensiblement nulle entre ses bornes de puissance amont et aval (18, 20), et l'ouverture d'un contacteur (CT1, CT2) électromécanique respectif pour une valeur sensiblement minimale de l'énergie du ou des condensateurs (C1, C2, C3) auxquels ledit contacteur (CT1, CT2) est connecté,
**en ce que** l'ensemble (24) de condensateurs (C1, C2, C3) comporte trois condensateurs (C1, C2, C3) agencés selon une configuration triangulaire, un premier condensateur (C1) étant connecté entre les première (Ph1) et deuxième (Ph2) phases, un deuxième condensateur (C2) étant connecté entre les deuxième (Ph2) et troisième phases (Ph3), et un troisième condensateur (C3) étant connecté entre les première (Ph1) et troisième (Ph3) phases, **en ce que** les conditions pour l'ouverture du premier contacteur (CT1) pour avoir la valeur minimale d'énergie stockée dans les condensateurs (C1, C2, C3) vérifient l'équation suivante : U31 - U12 = 0
où U31 représente la tension aux bornes du troisième condensateur (C3) et U12 représente la tension aux bornes du premier condensateur (C1), et
**en ce que** les conditions pour l'ouverture du deuxième contacteur (CT2) pour avoir la valeur minimale d'énergie stockée dans les condensateurs (C1, C2, C3) vérifient l'équation suivante : U31-U23 = 0
où U31 représente la tension aux bornes du troisième condensateur (C3) et U23 représente la tension aux bornes du deuxième condensateur (C2).

2. Compensateur d'énergie réactive (1) selon la revendication 1, **caractérisé en ce que** les moyens (33) de mesure sont propres à mesurer la tension ($U_{AC}$) entre les bornes de puissance amont et aval (18, 20) du premier contacteur (CT1) d'une part, et ($U_{BD}$) du deuxième contacteur (CT2) d'autre part, et **en ce**

**que** la fermeture d'un contacteur (CT1, CT2) respectif est déterminée à partir de la tension ($U_{AC}$, $U_{BD}$) mesurée entre les bornes de puissance amont et aval (18, 20) de ce contacteur (CT1, CT2).

3. Compensateur d'énergie réactive (1) selon la revendication 1, **caractérisé en ce que** les moyens (33) de mesure sont propres à mesurer uniquement la tension ($U_{AC}$) entre les bornes de puissance amont et aval (18, 20) du premier contacteur (CT1), et **en ce que** la fermeture du premier contacteur (CT1) est déterminée à partir de la tension ($U_{AC}$) mesurée par ces moyens (33) de mesure, la fermeture du deuxième contacteur (CT2) étant déterminée en fonction de celle du premier contacteur (CT1) avec un décalage temporel prédéterminé entre la fermeture du premier contacteur (CT1) et la fermeture du deuxième contacteur (CT2).

4. Compensateur d'énergie réactive (1) selon la revendication 3, **caractérisé en ce que** la tension triphasée du réseau est périodique, et le décalage temporel prédéterminé est sensiblement égal au quart de la période de la tension triphasée.

5. Compensateur d'énergie réactive (1) selon l'une des revendications précédentes, **caractérisé en ce qu'**il comprend exactement deux contacteurs (CT1, CT2) électromécaniques.

6. Compensateur d'énergie réactive (1) selon l'une des revendications 1 à 4, **caractérisé en ce qu'**il comprend trois contacteurs (CT1, CT2), chacun étant propre à être connecté électriquement à une phase (Ph1, Ph2, Ph3) respective du réseau (4).

7. Compensateur d'énergie réactive (1) selon l'une des revendications précédentes, **caractérisé en ce que** les moyens (36, 38) de commande des contacteurs (CT1, CT2) sont propres à envoyer des signaux de commande aux contacteurs (CT1, CT2), et les moyens (36, 38) de commande comportent en outre des moyens de recalage temporel de l'envoi des signaux de commande en fonction d'une mesure du temps de commutation de chacun des contacteurs (CT1, CT2).

**Patentansprüche**

1. Blindenergiekompensator (1) für ein Dreiphasennetz (4), das eine erste Phase (6), eine zweite Phase (7) und eine dritte Phase (8) aufweist, wobei der Kompensator (1) über eine Baugruppe (24) von Kondensatoren (C1, C2, C3), wobei mindestens zwei elektromechanische Schütze (CT1, CT2) elektrisch an die Baugruppe (24) der Kondensatoren (C1, C2, C3) angeschlossen sind, wobei jedes Schütz (CT1, CT2) mindestens einen vorgeordneten Leistungsanschluss (18) und mindestens einen nachgeordneten Leistungsanschluss (20) hat, wobei ein elektrischer Strom zwischen dem vorgeordneten und nachgeordneten Leistungsanschluss (18, 20) in der geschlossenen Stellung des Schützes (CT1, CT2) fließen kann, wobei ein erstes Schütz (CT1) an die erste Phase (Ph1) angeschlossen werden kann und ein zweites Schütz (CT2) an die dritte Phase (Ph3) angeschlossen werden kann, Einrichtungen (33) zum Messen der Spannung zwischen dem vorgeordneten und nachgeordneten Leistungsanschluss (18, 20) mindestens eines elektromechanischen Schützes (CT1, CT2) und Einrichtungen (36, 38) zum Steuern der elektromechanischen Schütze (CT1, CT2) nach einem vorbestimmten Steuergesetz verfügt,

**dadurch gekennzeichnet, dass** das Steuergesetz das Schließen eines jeweiligen elektromechanischen Schützes (CT1, CT2) für eine im Wesentlichen null betragende Spannung ($U_{AC}$, $U_{BD}$) zwischen seinem vorgeordneten und nachgeordneten Leistungsanschluss (18, 20), und das Öffnen eines jeweiligen elektromechanischen Schützes (CT1, CT2) für einen im Wesentlichen minimalen Wert der Energie des Kondensators oder der Kondensatoren (C1, C2, C3) umfasst, auf den oder die das Schütz (CT1, CT2) aufgeschaltet ist,
dass die Baugruppe (24) der Kondensatoren (C1, C2, C3) drei Kondensatoren (C1, C2, C3) umfasst, die in einer Dreieckskonfiguration angeordnet sind, wobei ein erster Kondensator (C1) zwischen der ersten (Ph1) und zweiten (Ph2) Phase angeschlossen ist, wobei ein zweiter Kondensator (C2) zwischen der zweiten (Ph2) und dritten Phase (Ph3) angeschlossen ist, und ein dritter Kondensator (C3) zwischen der ersten (Ph1) und dritten (Ph3) Phase angeschlossen ist, dass die Bedingungen zum Öffnen des ersten Schützes (CT1), um den minimalen Wert von in den Kondensatoren (C1, C2, C3) gespeicherter Energie zu haben, die folgende Gleichung erfüllen: U31 - U12 = 0 worin U31 die Spannung an den Anschlüssen des dritten Kondensators (C3) und U12 die Spannung an den Anschlüssen des ersten Kondensators (C1) darstellt, und
dass die Bedingungen zum Öffnen des zweiten Schützes (CT2), um den minimalen Wert von in den Kondensatoren (C1, C2, C3) gespeicherter Energie zu haben, die folgende Gleichung erfüllen: U31 - U23 = 0 worin U31 die Spannung an den Anschlüssen des dritten Kondensators (C3) und U23 die Spannung an den Anschlüssen des zweiten Kondensators (C2) darstellt.

**2.** Blindenergiekompensator (1) nach Anspruch 1, **dadurch gekennzeichnet, dass** die Messeinrichtungen (33) dazu geeignet sind, die Spannung ($U_{AC}$) zwischen dem vorgeordneten und nachgeordneten Leistungsanschluss (18, 20) des ersten Schützes (CT1) einerseits und ($U_{BD}$) des zweiten Schützes (CT2) andererseits zu messen, und dass das Schließen eines jeweiligen Schützes (CT1, CT2) ausgehend von der zwischen dem vorgeordneten und nachgeordneten Leistungsanschluss (18, 20) dieses Schützes (CT1, CT2) gemessenen Spannung ($U_{AC}$, $U_{BD}$) bestimmt wird.

**3.** Blindenergiekompensator (1) nach Anspruch 1, **dadurch gekennzeichnet, dass** die Messeinrichtungen (33) dazu geeignet sind, nur die Spannung ($U_{AC}$) zwischen dem vorgeordneten und nachgeordneten Leistungsanschluss (18, 20) des ersten Schützes (CT1) zu messen, und dass das Schließen des ersten Schützes (CT1) ausgehend von der durch diese Messeinrichtungen (33) gemessenen Spannung ($U_{AC}$) bestimmt wird, wobei das Schließen des zweiten Schützes (CT2) in Abhängigkeit von demjenigen des ersten Schützes (CT1) mit einem vorbestimmten Zeitversatz zwischen dem Schließen des ersten Schützes (CT1) und dem Schließen des zweiten Schützes (CT2) bestimmt wird.

**4.** Blindenergiekompensator (1) nach Anspruch 3, **dadurch gekennzeichnet, dass** die Dreiphasenspannung des Netzes periodisch ist und der vorbestimmte Zeitversatz im Wesentlichen gleich einem Viertel der Periode der Dreiphasenspannung ist.

**5.** Blindenergiekompensator (1) nach einem der vorhergehenden Ansprüche, **dadurch gekennzeichnet, dass** er über genau zwei elektromechanische Schütze (CT1, CT2) verfügt.

**6.** Blindenergiekompensator (1) nach einem der Ansprüche 1 bis 4, **dadurch gekennzeichnet, dass** er über drei Schütze (CT1, CT2) verfügt, wovon jedes elektrisch an eine jeweilige Phase (Ph1, Ph2, Ph3) des Netzes (4) angeschlossen werden kann.

**7.** Blindenergiekompensator (1) nach Anspruch 1, **dadurch gekennzeichnet, dass** die Einrichtungen (36, 38) zum Steuern der Schütze (CT1, CT2) Steuersignale an die Schütze (CT1, CT2) schicken können, und die Steuereinrichtungen (36, 38) darüber hinaus über Einrichtungen zur Zeitneueinstellung des Versands der Steuersignale in Abhängigkeit von einer Messung der Schaltzeit jedes der Schütze (CT1, CT2) verfügen.

**Claims**

**1.** Reactive power compensator (1) for a three-phase network (4) having a first phase (6), a second phase (7) and a third phase (8), the compensator (1) comprising an assembly (24) of capacitor(s) (C1, C2, C3), at least two electromechanical contactors (CT1, CT2) electrically connected to the assembly (24) of capacitor(s) (C1, C2, C3), each contactor (CT1, CT2) comprising at least one upstream power terminal (18) and at least one downstream power terminal (20), an electric current being suitable for circulating between the upstream and downstream power terminals (18, 20) in the closed position of the contactor (CT1, CT2), a first contactor (CT1) being suitable for being connected to the first phase (Ph1) and a second contactor (CT2) being suitable for being connected to the third phase (Ph3), means (33) for measuring the voltage between the upstream and downstream power terminals (18, 20) of at least one electromechanical contactor (CT1, CT2), and means (36, 38) for controlling the electromechanical contactors (CT1, CT2) according to a predetermined control algorithm,

**characterised in that** the control algorithm comprises the closure of a respective electromechanical contactor (CT1, CT2) for a substantially zero voltage ($U_{AC}$, $U_{BD}$) between the upstream and downstream power terminals (18, 20) thereof, and the opening of a respective electromechanical contactor (CT1, CT2) for a substantially minimum power value of the capacitor or the capacitors (C1, C2, C3) to which said contactor (CT1, CT2) is connected,

**in that** the assembly (24) of capacitors (C1, C2, C3) comprises three capacitors (C1, C2, C3) arranged according to a triangular configuration, a first capacitor (C1) being connected between the first (Ph1) and second (Ph2) phases, a second capacitor (C2) being connected between the second (Ph2) and third phases (Ph3), and a third capacitor (C3) being connected between the first (Ph1) and third (Ph3) phases, **characterised in that** the conditions for opening the first contactor (CT1) to obtain the minimum power value stored in the capacitors (C1, C2, C3) verify the following equation:

$$U31 - U12 = 0$$

where U31 represents the voltage at the terminals of the third capacitor (C3) and U12 represents the voltage at the terminals of the first capacitor (C1), and **in that** the conditions for opening the second contactor (CT2) to obtain the minimum power value stored in the capacitors (C1, C2, C3) verify the following equation:

$$U31 - U23 = 0$$

where U31 represents the voltage at the terminals of the third capacitor (C3) and U23 represents the voltage at the terminals of the second capacitor (C2).

2. Reactive power compensator (1) according to claim 1, **characterised in that** the measuring means (33) are suitable for measuring the voltage ($U_{AC}$) between the upstream and downstream power terminals (18, 20) of the first contactor (CT1), on the one hand, and ($U_{BD}$) of the second contactor (CT2), on the other hand, and **in that** the closure of the respective contactor (CT1, CT2) is determined on the basis of the voltage ($U_{AC}$, $U_{BD}$) measured between the upstream and downstream power terminals (18, 20) of the contactor (CT1, CT2).

3. Reactive power compensator (1) according to claim 1, **characterised in that** the measuring means (33) are suitable for measuring only the voltage ($U_{AC}$) between the upstream and downstream power terminals (18, 20) of the first contactor (CT1), and **in that** the closure of the first contactor (CT1) is determined on the basis of the voltage ($U_{AC}$) measured by the measuring means (33), the closure of the second contactor (CT2) being determined as a function of that of the first contactor (CT1) with a predetermined time delay between the closure of the first contactor (CT1) and the closure of the second contactor (CT2).

4. Reactive power compensator (1) according to claim 3, **characterised in that** the three-phase voltage of the network is periodic, and the predetermined time delay is substantially equal to one quarter of the three-phase voltage period.

5. Reactive power compensator (1) according to any one of the previous claims, **characterised in that** it comprises exactly two electromechanical contactors (CT1, CT2).

6. Reactive power compensator (1) according to any one of claims 1 to 4, **characterised in that** it comprises three contactors (CT1, CT2), each being suitable for being electrically connected to a respective phase (Ph1, Ph2, Ph3) of the network (4).

7. Reactive power compensator (1) according to any one of the previous claims, **characterised in that** the means (36, 38) for controlling the contactors (CT1, CT2) are suitable for sending control signals to the contactors (CT1, CT2), and the control means (36, 38) further comprise means for time shifting the transmission of the control signal according to a switching time measurement of each of the contactors (CT1, CT2).

## FIG.1

FIG.2

FIG.3

FIG.4

EP 2 717 408 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2304240 A
- US 5963021 A